# EUROPÄISCHE PATENTSCHRIFT

(11) **EP 1 354 693 B1**
(45) Veröffentlichungstag und Bekanntmachung des Hinweises auf die Patenterteilung: **30.12.2009**
(21) Anmeldenummer: 03006427.3
(22) Anmeldetag: 21.03.2003
(51) Int. Cl.: B29C 65/08, B29C 65/78, B65B 51/22

(54) **Vorrichtung sowie Verfahren zum Verschweissen dünnwandiger Werstücke mittels Ultraschall**
Process for ultrasonic welding of thin walled parts
Procédé pour le soudage par ultrasons de pièces à paroi mince

(30) Priorität: 30.03.2002 DE 10214405
(43) Veröffentlichungstag der Anmeldung: 22.10.2003
(73) Patentinhaber: Herrmann Ultraschalltechnik GmbH & Co. KG, 76307 Karlsbad-Ittersbach (DE)
(72) Erfinder: Möglich, Hartmut, 76275 Ettlingen (DE)
(74) Vertreter: Knapp, Thomas

(56) Entgegenhaltungen:
- EP-A- 1 101 856
- FR-A- 2 087 174
- JP-A- 57 120 412
- US-A- 2 638 963
- US-A- 3 821 048
- US-A- 4 517 790
- US-A- 4 768 326
- US-A- 4 909 871
- US-A- 5 067 302

## Beschreibung

Die Erfindung betrifft zunächst eine Vorrichtung zum Verschweißen dünnwandiger Werkstücke mittels Ultraschall, wie beispielsweise Lebensmittelbehältern aus Folie, Vlies oder aus Folien-Vlies-Verbindungen, mit mindestens zwei Bauelementen, nämlich einer Sonotrode und einem Gegenwerkzeug für die Sonotrode, wobei das eine Bauelement einen Arbeitsbereich aufweist, welcher wenigstens während des Verschweißvorgangs einem Arbeitsbereich des anderen Bauelements zugewandt ist.

Eine derartige Vorrichtung ist aus der DE 100 27 735 A1 der Anmelderin bekannt. Diese beschreibt eine Ultraschall-Schweißvorrichtung mit einer Sonotrode und einem Gegenhalter (auch "Amboss") genannt. Die Sonotrode und auch der Gegenhalter weisen jeweils Arbeitskanten auf, zwischen denen während des Verschweißvorganges das zu verschweißende Werkstück verklemmt ist.

Die bekannte Vorrichtung wird vor allem zur Herstellung von Behältern für Lebensmittel, wie beispielsweise Milch, Säfte, etc. verwendet. Das Temperaturmaximum in dem zu verschweißenden Bereich des Werkstücks wird beim Verschweißen dort erreicht, wo die Amplitude und der mechanische Druck der in das Werkstück eingebrachten Ultraschallwellen ihr Maximum erreichen. Die Ultraschallenergie wird dabei von der Sonotrode in das Werkstück eingekoppelt.

US 3,821,048 beschreibt eine Vorrichtung zum Verschweißen von Endlosbändern mittels Sonotrode und Amboss. JP 57-120412 beschreibt eine Ultraschall-Schweißeinrichtung mit einem Amboss, aus dem Positionierstifte für das zu verschweißende Material hervorstehen.

Aufgabe der vorliegenden Erfindung ist es, eine Vorrichtung der eingangs genannten Art so weiterzubilden, dass die mit ihr hergestellten Schweißnähte von einem Werkstück zum anderen eine gleichbleibend hohe Qualität und Dichtheit aufweisen.

Diese Aufgabe wird bei einer Vorrichtung der eingangs genannten Art dadurch gelöst, dass der Arbeitsbereich des einen Bauelements mindestens einen Vorsprung und der Arbeitsbereich des anderen Bauelements mindestens eine Ausnehmung aufweist, in die der Vorsprung während des Verschweißvorgangs eingreifen kann.

### Vorteile der Erfindung

Bei der erfindungsgemäßen Vorrichtung wird das zu verschweißende Werkstück von der Sonotrode und dem Gegenwerkzeug während des Verschweißvorganges unverrückbar in einer zur Sonotrode und dem Gegenwerkzeug starren Position gehalten. Hierdurch wird auf einfache und preiswerte Art und Weise verhindert, dass sich das Werkstück während des Verschweißvorganges relativ zu den Arbeitsbereichen der Sonotrode und/oder des Gegenwerkzeuges verschiebt.

Ein solches Verschieben des Werkstücks ist insbesondere bei mit Flüssigkeit gefüllten Behältern zu befürchten, da es beim Abfüllen der Flüssigkeit in die Behälter in der Abfüllvorrichtung immer auch zu einer Benetzung der Behälteraußenwand mit der abzufüllenden Flüssigkeit kommt, was zu einer "glitschigen" Oberfläche am Werkstück führt. Hierdurch wiederum wird die Reibung zwischen dem Werkstück und den am Werkstück anliegenden Arbeitsbereichen der Sonotrode und des Gegenwerkzeuges reduziert, was bisher ein unverrückbares Halten des zu verschweißenden Werkstückes mittels der Sonotrode und des Gegenhalters erschwert hat. Verrutscht das Werkstück jedoch während des Verschweißvorgangs, wird die Energie in einen größeren Materialbereich eingekoppelt und so eine ggf. undichte Schweißnaht erzeugt.

Durch den Vorsprung und die Ausnehmung an der Sonotrode bzw. am Gegenwerkzeug wird während des Verschweißvorganges ein Bereich des Werkstückes unmittelbar neben dem zu verschweißenden Bereich verformt, verklemmt und so unverrückbar festgehalten. Auch bei Werkstücken mit glatten und/oder glitschigen Oberflächen wird so eine reproduzierbare Qualität der Schweißnaht gewährleistet. Dabei versteht sich, dass die Abmessungen einerseits des Vorsprungs und andererseits der Ausnehmung so aufeinander abgestimmt sind, dass ein Spalt zwischen der Wand des Vorsprungs und der Wand der Ausnehmung geschaffen wird, in dem die Behälterwand aufgenommen werden kann, ohne beschädigt zu werden. Zusätzliche Spann- oder Klemmeinrichtungen sind zum Halten des Werkstücks nicht erforderlich. Dies reduziert den Preis der erfindungsgemäßen Vorrichtung und vereinfacht die Reinigung, da insgesamt weniger Teile notwendig sind, und auch keine zusätzlichen Hinterschnitte entstehen. Da das Werkstück gegenüber der Sonotrode und dem Gegenwerkzeug sicher gehalten ist, können auch glatte Schweißlinien realisiert werden. Das zusätzliche Einbringen von Konturen im Schweißbereich ist damit nicht erforderlich.

Vorteilhafte Weiterbildungen der Erfindung sind in Unteransprüchen angegeben.

Bei einer ersten bevorzugten Ausgestaltung der erfindungsgemäßen Vorrichtung ist mindestens ein Vorsprung am Gegenwerkzeug und mindestens eine Ausnehmung an der Sonotrode vorhanden. Dies hat fertigungstechnische Vorteile und führt zu einem optimalen Energieeintrag von der Sonotrode in den zu verschweißenden Bereich des Werkstücks.

In Weiterbildung hierzu wird vorgeschlagen, dass der Arbeitsbereich des Gegenwerkzeugs einen Kosmetiknahtbereich und einen Dichtnahtbereich umfasst, und dass der Vorsprung zwischen Kosmetiknahtbereich und Dichtnahtbereich angeordnet ist. Durch diese Anordnung wird bei dem fertig verschweißten Werkstück ein optisch besonders ansprechendes Ergebnis erzielt. Gleichzeitig ist der Bereich des Werkstücks, welcher von der Sonotrode und dem Gegenwerkzeug festgehalten wird, den eigentlichen Nahtbereichen unmittelbar benachbart, so dass die Schweißqualität beider Nahtbereiche sehr gut reproduzierbar ist.

Vorgeschlagen wird auch, dass mindestens ein Vorsprung als sich längs zur Längserstreckung des einen Bauelements erstreckender Steg und mindestens eine Ausnehmung als sich längs zur Längserstreckung des anderen Bauelements erstreckende und zum Steg komplementäre Nut ausgebildet ist. Vorzugsweise erstrecken sich der Steg und die Nut über die gesamte Länge der Sonotrode bzw. des Gegenwerkzeugs. Dies gewährleistet eine optimale Verklemmung des Werkstücks zwischen der Sonotrode und dem Gegenwerkzeug während des Schweißvorgangs. Alternativ ist anstelle des Stegs auch mindestens ein Zapfen und/oder anstelle der Nut mindestens ein Loch denkbar.

Besonders vorteilhaft ist auch, wenn der Vorsprung an einem vom Rest des Bauelements separaten und auswechselbaren Teil angeordnet ist. Hierdurch wird die Tatsache berücksichtigt, dass der Vorsprung durch die Vielzahl der Klemmvorgänge, die eine derartige Schweißvorrichtung durchführen muss, mit der Zeit abgenutzt wird. Durch die erfindungsgemäße Weiterbildung kann der Vorsprung leicht und preiswert ausgewechselt werden, ohne dass das gesamte Bauteil ausgetauscht werden muss. Somit werden Beschädigungen durch den Klemmvorgang zuverlässig vermieden.

Fertigungstechnisch vorteilhaft kann es jedoch auch sein, wenn der Vorsprung einstückig in das Bauelement integriert ist. Auch die Stabilität des Vorsprunges ist bei dieser Weiterbildung der erfindungsgemäßen Vorrichtung besonders gut.

Bei einer Ausgestaltung der erfindungsgemäßen Vorrichtung ist an dem abstehenden Ende des Vorsprungs und/oder am Rand der Ausnehmung eine Einführschräge vorhanden. Durch diese Einführschräge(n) werden Beschädigungen am zu bearbeitenden Werkstück vermieden, wenn ein zu dem zu verschweißenden Bereich benachbarter Bereich zwischen der Sonotrode und dem Gegenwerkzeug verklemmt wird.

Die Erfindung betrifft auch ein Verfahren zum Verschweißen dünnwandiger Werkstücke mittels Ultraschall, wie beispielsweise Lebensmittelbehältern aus Folie, Vlies oder aus Folien-Vlies-Verbindungen, bei dem das Werkstück zwischen Arbeitsbereichen zweier Bauteile, nämlich einer Sonotrode und eines Gegenwerkzeugs, angeordnet wird, wobei die Arbeitsbereiche wenigstens während des Verschweißvorganges einander zugewandt sind.

Um die Qualität der Schweißnaht, welche durch dieses Verfahren hergestellt wird, von einem Werkstück zum anderen zu gewährleisten, also reproduzierbar zu machen, wird vorgeschlagen, dass während des Verschweißvorgangs ein Bereich des Werkstücks von einem an einem Bauteil vorhandenen Vorsprung beaufschlagt und verformt wird, welcher in eine am gegenüberliegenden Bauteil vorhandene Aufnehmung eingreift.

### Zeichnungen

Nachfolgend werden Ausführungsbeispiele der Erfindung unter Bezugnahme auf die beiliegende Zeichnung im Detail erläutert. In der Zeichnung zeigen:
- Figur 1: eine perspektivische Darstellung einer Vorrichtung zum Verschweißen dünnwandiger Werkstücke mittels Ultraschall mit einer Sonotrode und einem Gegenwerkzeug;
- Figur 2: eine perspektivische Explosionsdarstellung des Gegenwerkzeugs von Figur 1;
- Figur 3: eine perspektivische Darstellung der Sonotrode von Figur 1;
- Figur 4: einen Querschnitt durch die Sonotrode von Figur 3 und das Gegenwerkzeug von Figur 2 in Einbaulage, mit einem dazwischen angeordneten Bereich eines zu verschweißenden Werkstücks;
- Figur 5: eine Draufsicht auf eine alternative Ausführungsform eines Gegenwerkzeugs;
- Figur 6: eine Schnittdarstellung längs der Linie VI-VI von Figur 5;
- Figur 7: eine Detaildarstellung VII von Figur 6;
- Figur 8: eine Seitenansicht einer alternativen Ausführungsform einer Sonotrode; und
- Figur 9: ein Detail IX von Figur 8.

### Beschreibung der Ausführungsbeispiele

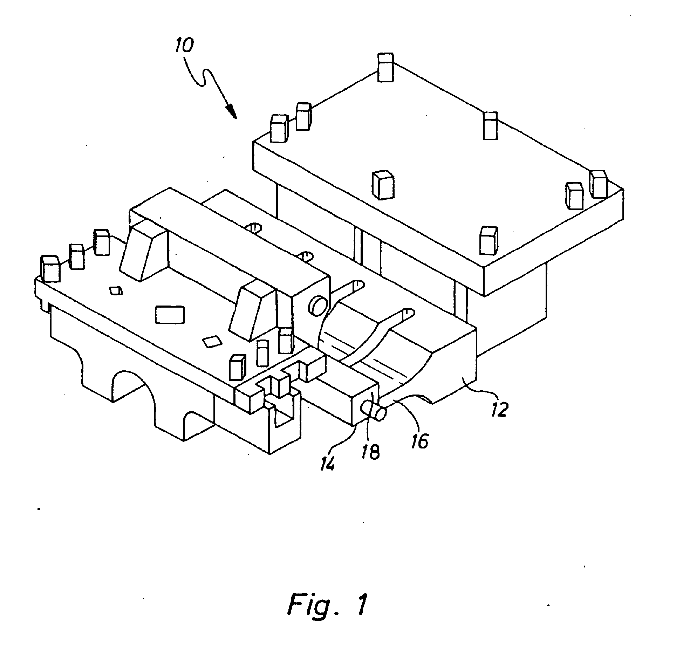

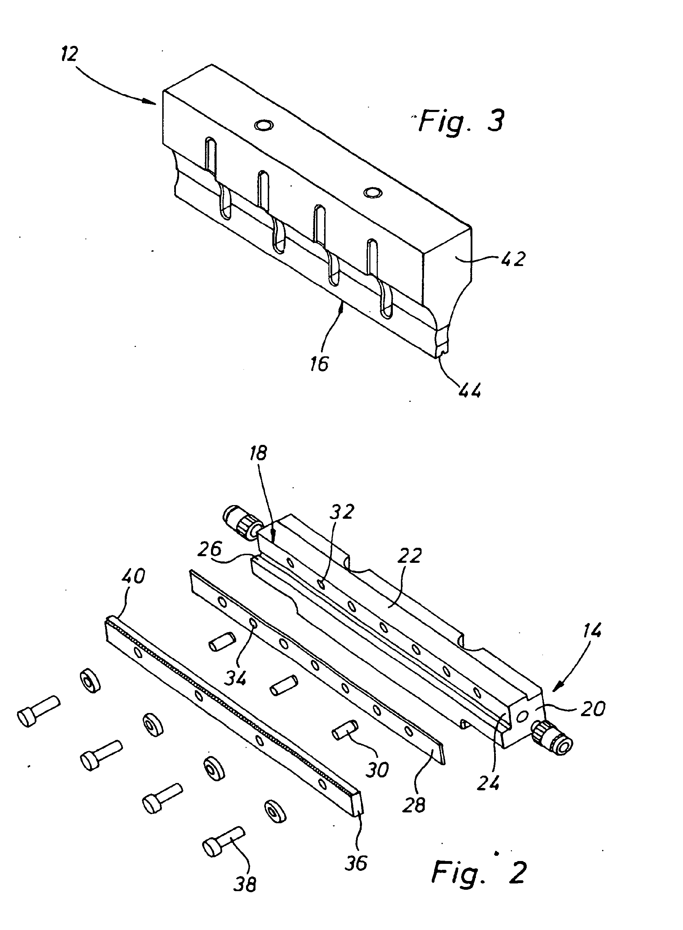

In Figur 1 trägt eine Vorrichtung zum Verschweißen dünnwandiger Werkstücke insgesamt das Bezugszeichen 10. Mit dieser Vorrichtung können beispielsweise Lebensmittelbehälter, welche mit einer Flüssigkeit gefüllt sind, mittels Ultraschall verschweißt und hierdurch dicht verschlossen werden. Zu diesem Zweck verfügt die Vorrichtung 10 über eine Sonotrode 12 und ein Gegenwerkzeug 14, welches auch als "Amboss" bezeichnet wird. Die Sonotrode 12 verfügt über einen Arbeitsbereich 16, und auch der Amboss 14 verfügt über einen Arbeitsbereich 18. Beide Arbeitsbereiche sind flächig ausgebildet und einander zugewandt. Die genaue Ausgestaltung der Arbeitsbereiche 16 und 18 von Sonotrode 12 und Amboss 14 wird nun im Detail unter Bezugnahme auf die Figuren 2 bis 4 erläutert:

Der Amboss 14 umfasst einen Grundkörper 20, der eine insgesamt in etwa rechteckige längliche Gestalt aufweist. Auf seiner in Einbaulage der Sonotrode 12 zugewandten Seite ist eine insgesamt ebene und leicht erhabene erste Gegenhalterfläche 22 ausgebildet. Diese wird von einer zu der Gegenhalterfläche 22 in einem rechten Winkel stehenden Seitenfläche 24 begrenzt, welche Teil einer Stufe 26 ist.

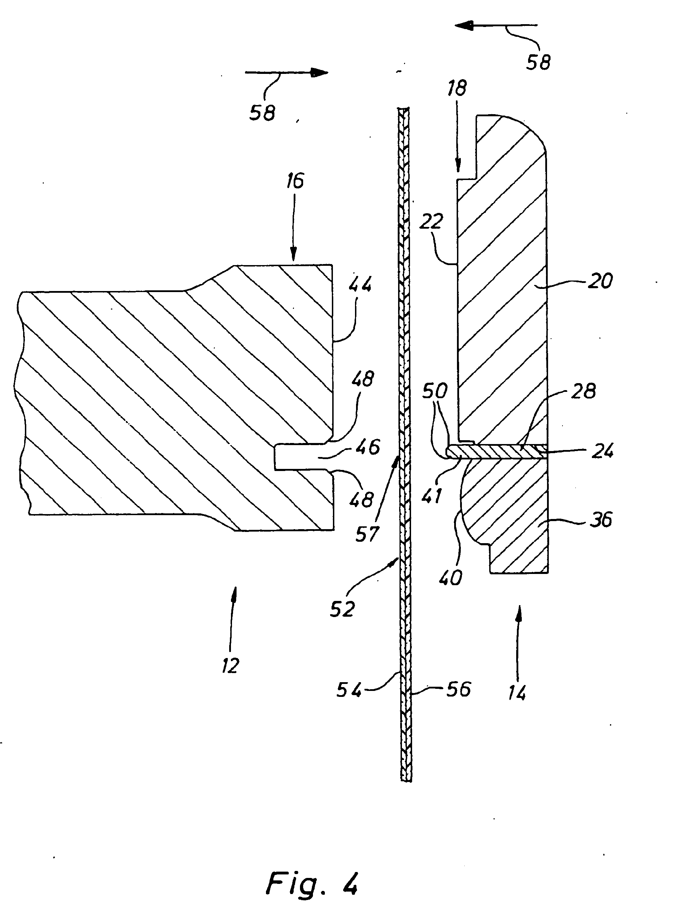

In die Stufe 26 wird ein Schikanenblech 28 eingelegt und mittels Bolzen 30 am Grundkörper 20 positioniert. In Einbaulage liegt das Schikanenblech 28 mit einem Bereich flächig an der Seitenfläche 24 des Grundkörpers 20 des Ambosses 14 an. Die Bolzen 30 sind in entsprechende Bohrungen 32 und 34 in der Seitenfläche 24 bzw. dem Schikanenblech 28 eingeführt. Wie aus Figur 4 hervorgeht, steht das Schikanenblech 28 in Einbaulage etwas über die erste Gegenhalterfläche 22 über, so dass ein Vorsprung 41 gebildet wird.

Auf das Schikanenblech 28 ist seitlich ein leistenartiges Element 36 aufgesetzt. Es wird mit Schrauben 38 in Gewindebohrungen in der Seitenfläche 24 des Grundkörpers 20 verschraubt. Auf diese Weise wird das Schikanenblech 28 zwischen dem leistenartigen Element 36 und dem Grundkörper 20 verklemmt. Das leistenartige Element 36 weist eine zweite Gegenhalterfläche 40 auf. Diese ist in Einbaulage ebenfalls der Sonotrode 12 zugewandt und im Gegensatz zur ersten Gegenhalterfläche 22 ballig gekrümmt. Die Krümmungsachse ist dabei parallel zur Längsachse des Ambosses 14. Das Schikanenblech 28 steht mit dem Vorsprung 41 auch über den "höchsten" Punkt der zweiten Gegenhalterfläche 40 etwas über. Der höchste Punkt der zweiten Gegenhalterfläche 40 ist gegenüber der Ebene der ersten Gegenhalterfläche 22 ganz leicht zurückgesetzt (ca. 0,1 mm).

Die Sonotrode 12 weist einen Zentralbereich 42 auf, der sich zu dem in Einbaulage dem Amboss 14 zugewandten Arbeitsbereich 16 hin verjüngt. Der Arbeitsbereich 16 der Sonotrode 12 wird zum Amboss 14 hin von einer insgesamt ebenen Arbeitsfläche 44 begrenzt. In dieser ist, gegenüber ihrer in Längsrichtung verlaufenden Mittelachse etwas versetzt, eine insgesamt rechteckige Nut 46 vorhanden. Die Kanten der Nut 46 zur Arbeitsfläche 44 der Sonotrode 12 hin weisen jeweils eine Einführschräge 48 auf. Analog hierzu sind am abstehenden Ende des Vorsprungs 41 des Schikanenblechs 28 entsprechende Schrägen 50 vorgesehen. Die Breite der Nut 46 ist etwas größer als die Dicke des Vorsprungs 41. Die Nut 46 ist darüber hinaus tiefer als der Überstand des Schikanenblechs 28 über die Gegenhalterflächen 22 bzw. 40, also tiefer als der Vorsprung 41 hoch ist.

Die Vorrichtung 10 arbeitet folgendermaßen: Zunächst ist der Arbeitsbereich 16 der Sonotrode 12 vom Arbeitsbereich 18 des Ambosses 14 beabstandet. In dem Zwischenraum zwischen Sonotrode 12 und Amboss 14 wird nun ein Bereich 52 eines weiters nicht dargestellten und mit einem Lebensmittel gefüllten Behälters eingebracht. Dieser besteht aus zwei dicht aneinander liegenden Lagen 54 und 56 einer Folie, eines Vlieses oder einer Folien-Vlies-Verbindung. Der Hohlraum, in dem das Lebensmittel aufgenommen ist, befindet sich in Figur 4 unterhalb des Bereichs 52, ist jedoch nicht dargestellt.

Nun werden Amboss 14 und Sonotrode aufeinander zubewegt (Pfeile 58), bis der Bereich 52 zwischen der Sonotrode 12 und dem Amboss 14 verklemmt ist. Dabei wird durch den Vorsprung 41 am Schikanenblech 28 ein Bereich 57 des Bereichs 52 des Lebensmittelbehälters in die Nut 46 gedrückt und schikanenartig verformt. Der Spalt zwischen dem Vorsprung 41 und der Wand der Nut 46 (also das "Spiel" des Vorsprungs 41 in der Nut 46) ist so ausreichend groß, dass das Material des Bereichs 57 nicht beschädigt wird.

Auf diese Weise wird der Bereich 52 gegenüber dem Amboss 14 und der Sonotrode 12 unverrückbar festgelegt, auch wenn seine Außenseite ggf. durch flüssiges Lebensmittel kontaminiert ist.

Wird nun die Sonotrode 12 in Schwingungen versetzt, deren Frequenz im Bereich des Ultraschalls liegt, kommt es in den mit Druck beaufschlagten Zonen des Werkzeugs zu einer starken Temperaturerhöhung. Durch diese werden die beiden Lagen 54 und 56 im Bereich der Gegenhalterflächen 22 und 40 miteinander verschmolzen. In jenem Bereich, welcher zwischen der Arbeitsfläche 44 der Sonotrode und der ersten Gegenhalterfläche 22 des Ambosses 14 verklemmt ist, entsteht eine sog. "Kosmetiknaht". In jenem Bereich, welcher zwischen der Arbeitsfläche 44 und der zweiten Gegenhalterfläche 40 des Ambosses 14 verklemmt ist, entsteht dagegen die eigentliche Dichtnaht. Nach dem Verschweißvorgang werden Amboss 14 und Sonotrode 12 entgegen der Richtung der Pfeile 58 zurückgezogen. Der Bereich 52 des Lebensmittelbehälters kommt daher frei und der verschweißte Behälter kann aus der Vorrichtung 10 entnommen werden.

In den Figuren 4 bis 7 ist eine alternative Ausführungsform eines Ambosses 14 dargestellt. Dabei tragen solche Teile und Bereiche, welche äquivalente Funktionen zu Teilen und Bereichen des oben beschriebenen Ambosses 14 aufweisen, die gleichen Bezugszeichen und sind nicht nochmals im Detail erläutert.

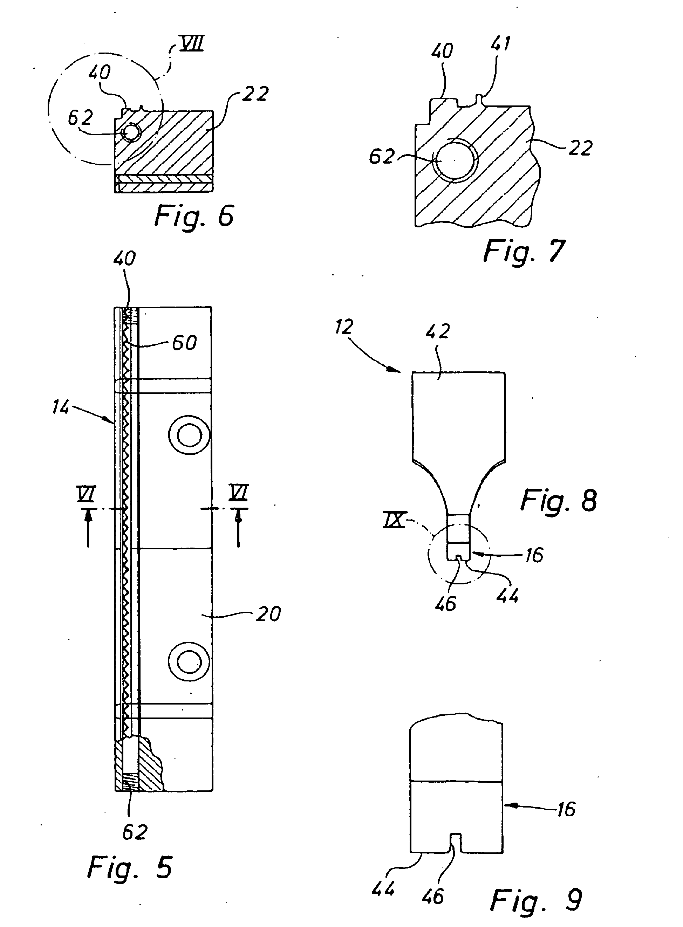

Im Gegensatz zu dem in den Figuren 1 bis 4 gezeigten Amboss 14 weist der in den Figuren 5 bis 7 dargestellte Amboss 14 nur eine einzige Gegenhalterfläche 40 auf. Diese weist kreuzförmige und in einer Reihe angeordnete Erhebungen 60 auf. Durch diese wird im Betrieb gleichzeitig eine Dichtnaht und eine Kosmetiknaht hergestellt. Anstelle eines separaten Schikanenblechs ist bei dem in den Figuren 5 bis 7 dargestellten Amboss 14 ein Steg 41 an den Grundkörper 20 des Ambosses 14 angeformt. In dem Grundkörper 20 verläuft darüber hinaus ein Kühlmittelkanal 62.

In den Figuren 8 und 9 ist eine alternative Ausführungsform einer Sonotrode 12 dargestellt. Auch hier gilt, dass solche Teile und Bereiche, welche äquivalente Funktionen zu den Teilen und Bereichen der oben beschriebenen Sonotrode 12 aufweisen, die gleichen Bezugszeichen tragen. Die in den Figuren 8 und 9 dargestellte Sonotrode 12 unterscheidet sich im Wesentlichen durch die Lage der Nut 46: Diese ist gegenüber der Längsachse der Sonotrode 12 nicht außermittig, sondern mittig angeordnet.

## Patentansprüche

1. Vorrichtung (10) zum Verschweißen dünnwandiger Werkstücke (52) mittels Ultraschall, wie beispielsweise Lebensmittelbehältern aus Folie, Vlies, oder aus Folien-Vliesverbindungen, mit mindestens zwei Bauelementen, nämlich einer Sonotrode (12) und einem Gegenwerkzeug (14) für die Sonotrode (12), wobei das eine Bauelement (12) einen Arbeitsbereich (16) aufweist, welcher wenigstens während des Verschweißvorgangs einem Arbeitsbereich (18) des anderen Bauelements (14) zugewandt ist, **dadurch gekennzeichnet, dass** der Arbeitsbereich (18) des einen Bauelements (14) mindestens einen Vorsprung (41) und der Arbeitsbereich (16) des anderen Bauelements (12) mindestens eine Ausnehmung (46) aufweist, in die der Vorsprung (41) während des Verschweißvorgangs eingreifen kann, wobei der Vorsprung (41) und die Ausnehmung (46) so aufeinander abgestimmt sind, dass hierdurch während des Verschweißvorgangs ein Bereich (52) des Werkstücks unmittelbar neben dem zu verschweißenden Bereich verformt, verklemmt und unverrückbar festgehalten wird, ohne beschädigt zu werden.

2. Vorrichtung (10) nach Anspruch 1, **dadurch gekennzeichnet, dass** mindestens ein Vorsprung (41) am Gegenwerkzeug (14) und mindestens eine Ausnehmung (46) an der Sonotrode (12) vorhanden ist.

3. Vorrichtung (10) nach Anspruch 2, **dadurch gekennzeichnet, dass** der Arbeitsbereich (18) des Gegenwerkzeugs (14) einen Kosmetiknahtbereich (20) und einen Dichtnahtbereich (40) umfasst, und dass der Vorsprung (41) zwischen Kosmetiknahtbereich (22) und Dichtnahtbereich (40) angeordnet ist.

4. Vorrichtung (10) nach einem der vorhergehenden Ansprüche, **dadurch gekennzeichnet, dass** mindestens ein Vorsprung als sich längs zur Längserstreckung des einen Bauelements (14) erstreckender Steg (41) und mindestens eine Ausnehmung (46) als sich längs zur Längserstreckung des anderen Bauelements (12) erstreckende und zum Steg (41) komplementäre Nut (46) ausgebildet ist.

5. Vorrichtung (10) nach einem der vorhergehenden Ansprüche, **dadurch gekennzeichnet, dass** der Vorsprung (41) an einem vom Rest des Bauelements (14) separaten und auswechselbaren Teil (28) angeordnet ist.

6. Vorrichtung (10) nach einem der vorhergehenden Ansprüche, **dadurch gekennzeichnet, dass** der Vorsprung (41) einstückig in das Bauelement (14) integriert ist.

7. Vorrichtung nach einem der vorhergehenden Ansprüche, **dadurch gekennzeichnet, dass** an dem abstehenden Ende des Vorsprungs (41) und/oder am Rand der Ausnehmung (46) mindestens eine Einführschräge (48, 50) vorhanden ist.

8. Verfahren zum Verschweißen dünnwandiger Werkstücke (52) mittels Ultraschall, wie beispielsweise Lebensmittelbehältern aus Folie, Vlies, oder aus Folien-Vliesverbindungen, bei dem das Werkstück (52) zwischen Arbeitsbereichen (16, 18) zweier Bauteile, nämlich einer Sonotrode (12) und eines Gegenwerkzeugs (14), angeordnet wird, wobei die Arbeitsbereiche (16, 18) wenigstens während des Verschweißvorgangs einander zugewandt sind, **dadurch gekennzeichnet, dass** während des Verschweißvorgangs ein Bereich (52) des Werkstücks von einem an einem Bauteil (14) vorhandenen Vorsprung (41) beaufschlagt und verformt wird, welcher in eine am gegenüberliegenden Bauteil (12) vorhandene Ausnehmung (46) eingreift, wobei der Vorsprung (41) und die Ausnehmung (46) so aufeinander abgestimmt sind, dass hierdurch während des Verschweißvorgangs ein Bereich (52) des Werkstücks unmittelbar neben dem zu verschweißenden Bereich verformt, verklemmt und unverrückbar festgehalten wird, ohne beschädigt zu werden.

## Claims

1. A device (10) for welding thin-walled workpieces (52) by means of ultrasound, such as, for example, foodstuff containers made of foil, fleece, or foil-fleece combinations, and having at least two components, namely a sonotrode (12) and a counter-tool (14) for the sonotrode (12), wherein the one component has a working area (16), which faces a working area (18) of the other component at least during the welding process, **characterized in that** the working area (18) of the one component (14) has at least one protrusion (41), and the working area (16) of the other component (12) has at least one cutout (46), which can be engaged by the protrusion (41) during the welding process, wherein the protrusion (41) and the cutout (46) are matched to each other in such a way that during the welding process an area (52) of the workpiece (52) immediately next to the area to be welded is deformed, clamped and immovably fixed in place without being damaged.

2. The device in accordance with claim 1, **characterized in that** at least one protrusion (41) is provided on the counter-tool (14), and at least one cutout (46) in the sonotrode (12).

3. The device in accordance with claim 2, **characterized in that** the working area (18) of the counter-tool (14) comprises a cosmetic seam area (20) and a sealed seam area (40), and that the protrusion (41) is arranged between the cosmetic seam area (20) and the sealed seam area (40).

4. The device in accordance with one of the preceding claims, **characterized in that** at least one protrusion is embodied in the form of a ridge (41) extending along the longitudinal extension of the one component (14), and at least one cutout (46) is embodied as a groove (46) extending along the longitudinal extension of the other component (12) and complementary to the ridge (41).

5. The device in accordance with one of the preceding claims, **characterized in that** the protrusion (41) is arranged on a part (28), which is separate from the remainder of the component (14) and is exchangeable.

6. The device in accordance with one of the preceding claims, **characterized in that** the protrusion (41) is integrated as one piece with the component (14).

7. The device in accordance with one of the preceding claims, **characterized in that** at least one inclined insertion element (48, 50) is provided on the protruding end of protrusion (41) and/or on the edge of the cutout (46).

8. A method for welding thin-walled workpieces (52) by means of ultrasound, such as, for example, foodstuff containers made of foil, fleece, or foil-fleece combinations, wherein the workpiece (52) is arranged between the working areas (16, 18) of two components, namely a sonotrode (12) and a counter-tool (14), wherein the working areas (16, 18) face each other at least during the welding process, **characterized in that** in the course of the welding process a protrusion (41), which is provided on a component (41) and engages a cutout (46) provided in the oppositely located component (12), acts on one area (52) of the workpiece and deforms it, wherein the protrusion (41) and the cutout (46) are matched to each other in such a way that during the welding process an area (52) of the workpiece immediately next to the area to be welded is deformed, clamped and immovably fixed in place without being damaged.

## Revendications

1. Dispositif (10) de soudage par ultrasons de pièces à paroi mince (52), telles que des récipients pour denrées alimentaires en film, en non-tissé ou en des combinaisons de film et de non-tissé, avec au moins deux composants, à savoir une sonotrode (12) et un contre-outil (14) pour la sonotrode (12), le composant (12) présentant une zone de travail (16) qui, au moins pendant l'opération de soudage, est agencée en regard d'une zone de travail (18) de l'autre composant (14), **caractérisé en ce que** la zone de travail (18) du composant (14) présente au moins un ressaut (41) et **en ce que** la zone de travail (16) de l'autre composant (12) présente au moins un évidement (46), dans lequel le ressaut (41) peut s'engager pendant l'opération de soudage, ledit ressaut (41) et ledit évidement (46) étant adaptés l'un à l'autre de manière à déformer, coincer et maintenir immobile pendant l'opération de soudage, sans l'abîmer, une zone (52) de la pièce d'oeuvre, située à proximité directe de la zone à souder.

2. Dispositif (10) selon la revendication 1, **caractérisé en ce qu'**il est prévu au moins un ressaut (41) sur le contre-outil (14) et au moins un évidement (46) sur la sonotrode (12).

3. Dispositif (10) selon la revendication 2, **caractérisé en ce que** la zone de travail (18) du contre-outil (14) comprend une zone de soudure cosmétique (20) et une zone de soudure d'étanchéité (40), et **en ce que** le ressaut (41) est agencé entre ladite zone de soudure cosmétique (22) et ladite zone de soudure d'étanchéité (40).

4. Dispositif (10) selon l'une quelconque des revendications précédentes, **caractérisé en ce qu'**il est prévu au moins un ressaut, qui se présente sous la forme d'une baguette (41) s'étendant dans la direction de la longueur du composant (14), et au moins un évidement (46), qui se présente sous la forme d'une rainure (46) de forme complémentaire à celle de la barrette (41) et qui s'étend dans la direction de la longueur de l'autre composant (12).

5. Dispositif (10) selon l'une quelconque des revendications précédentes, **caractérisé en ce que** le ressaut (41) est agencé sur une partie (28) interchangeable, séparée du reste du composant (14).

6. Dispositif (10) selon l'une quelconque des revendications précédentes, **caractérisé en ce que** le ressaut (41) est intégré au composant (14) en ne formant qu'un seul bloc avec celui-ci.

7. Dispositif (10) selon l'une quelconque des revendications précédentes, **caractérisé en ce qu'**il est prévu au moins un chanfrein d'introduction (48, 50) sur l'extrémité extérieure du ressaut (41) et/ou sur le bord de l'évidement (46).

8. Procédé de soudage par ultrasons de pièces à paroi mince (52), telles que des récipients pour denrées alimentaires en film, en non-tissé, ou en des combinaisons de film et de non-tissé, dans lequel la pièce d'oeuvre (52) est agencée entre les zones de travail (16, 18) de deux composants, à savoir une sonotrode (12) et un contre-outil (14), les zones de travail (16, 18) étant agencées en regard l'une de l'autre au moins pendant l'opération de soudage, **caractérisé en ce que**, pendant l'opération de soudage, une zone (52) de la pièce d'oeuvre est pressée et déformée par un ressaut que présente un composant (14) et qui vient s'engager dans un évidement (46) ménagé dans un composant (12) en regard, ledit ressaut (41) et ledit évidement (46) étant adaptés l'un à l'autre de manière à déformer, coincer et maintenir immobile pendant l'opération de soudage, sans l'abîmer, une zone (52) de la pièce d'oeuvre, située à proximité directe de la zone à souder.
